# EUROPÄISCHE PATENTSCHRIFT

(11) **EP 3 297 108 B1**
(45) Veröffentlichungstag und Bekanntmachung des Hinweises auf die Patenterteilung: **06.10.2021**
(21) Anmeldenummer: 17191375.9
(22) Anmeldetag: 15.09.2017
(51) Int. Cl.: H02B 1/20, H02B 1/42, H02B 1/18, H02B 1/16, H01R 25/16, H01R 31/06

(54) **SICHERUNGSANORDNUNG ZUR ABSICHERUNG VON AUSSENLEITERN EINER ELEKTRISCHEN SICHERUNGSEINHEIT ZUR BILDUNG EINES GEBÄUDEANSCHLUSSES**
FUSE ASSEMBLY FOR PROTECTING OUTER CONDUCTORS OF AN ELECTRICAL FUSE UNIT FOR FORMING A BUILDING CONNECTION
STRUCTURE À FUSIBLE DESTINÉE À LA PROTECTION DES CONDUCTEURS EXTÉRIEURS D'UN ENSEMBLE FUSIBLE ÉLECTRIQUE POUR FORMER UN BRANCHEMENT DE BÂTIMENT

(30) Priorität: 15.09.2016 DE 102016117397
(43) Veröffentlichungstag der Anmeldung: 21.03.2018
(73) Patentinhaber: Varlemann, Walter, 34454 Bad-Arolsen-Landau (DE); Frese, Bernd, 34479 Breuna (DE)
(72) Erfinder: Varlemann, Walter, 34454 Bad-Arolsen-Landau (DE); Frese, Bernd, 34479 Breuna (DE)
(74) Vertreter: Patentanwälte Walther Hinz Bayer PartGmbB

(56) Entgegenhaltungen:
- WO-A1-2015/008120
- GB-A- 2 034 984
- GB-A- 2 446 841

## Beschreibung

Die Erfindung betrifft eine Sicherungsanordnung aufweisend mehrere Sicherungen zur Absicherung von Außenleitern einer elektrischen Sicherungseinheit für einen Gebäudeanschluss, wobei die Sicherungen mit jeweiligen Außenleitern einer Vielzahl von Anschlussleitungen elektrisch verbunden sind. Die Erfindung richtet sich weiterhin auf eine Anschlussschiene zur Anordnung an mehrere Sicherungen sowie auf eine elektrische Sicherungseinheit.

### STAND DER TECHNIK

Sicherungseinheiten für einen Gebäudeanschluss werden auch als Elektro-Installationsverteiler oder allgemein als elektrischer Sicherungskasten bezeichnet, und derartige Sicherungseinheiten betreffen im Allgemeinen Installationen in Wohnhäusern und/oder in sonstigen Gebäuden. Die Vielzahl der Anschlussleitungen wird innerhalb eines Gebäudes an die Sicherungseinheit herangeführt, und die Außenleiter, auch Phasen genannt, die die Anschlussleitungen aufweisen, werden auf Anschlussklemmen verteilt, auf denen die Außenleiter aufgeschaltet sind. Bei einem gewöhnlichen Gebäudeanschluss handelt es sich dabei um drei Außenleiter L1, L2 und L3, wohingegen die Nullleiter und die Schutzleiter der einzelnen Anschlussleitungen des Gebäudes auf Sammelschienen aufgeklemmt werden. Von den Anschlussklemmen werden die einzelnen Außenleiter an die Ausgangsseiten der Sicherungen geführt, die gemeinsam die Sicherungsleiste bilden, beispielswiese indem die Sicherungen in einer Reihe nebeneinander angeordnet sind. Dabei erstreckt sich ein Bündel von Phasen zwischen den Sicherungen und der Anschlussklemme. Die Anschlussklemmen sind dabei wie auch die Sicherungen im Allgemeinen auf einer Schiene aufgesetzt und nebeneinander angeordnet. Wird die Hausinstallation durchgeführt, so werden die einzelnen Außenleiter der Anschlussleitungen an den Anschlussklemmen angeklemmt, wobei im Vorfeld eine Verdrahtung zwischen den Sicherungen der Sicherungsleiste und den Anschlussklemmen der Anschlussleiste vorgenommen wird.

Das Bündel aus der Vielzahl von Außenleitern zwischen den Sicherungen auf der Sicherungsleiste und den Anschlussklemmen auf der Anschlussleiste führt dabei häufig zu einer gesamtquerschnittsbezogen hohen Stromdichte und damit zu einer möglichen Erwärmung. Zudem ist der Verdrahtungsaufwand sehr hoch, und die Einzelverdrahtung der Sicherungen mit den Anschlussklemmen auf der Anschlussleiste erschwert durch eine mögliche Verwechselung der Leiter zu den einzelnen Stromkreisen eine Fehlersuche.

Aus der WO 2015/008120 A1 ist eine elektrische Sicherungs- und Verteileranordnung bekannt, mittels der Außenleiter mit Anschlussleitungen elektrisch verbunden sind. Dabei sind mehrere Nullleiter, Schutzleiter oder Strom führende Leiter der Anschlussleiter mittels jeweiligen Anschlussschienen gesammelt mit einem Nullleiter, einem Schutzleiter oder einem Strom führenden Leiter des Außenleiters elektrisch verbunden. Aus der GB 2 446 841 A ist eine Schaltvorrichtung bekannt, bei der Versorgungskabel unter Zwischenschaltung von Leistungsschaltern mit Anschlussleitungen verbunden sind. Dabei ist eine Anschlussleiste mit inneren Anschlussklemmen und dazugehörigen äußeren Anschlussklemmen vorgesehen, wobei die Anschlussleitung an den äußeren Anschlussklemmen angeschlossen werden. Eine beispielsweise durch Anschweißen mit der inneren Anschlussklemme verbundene Anschlussschiene bildet einen elektrischen Kontakt zu einer Sicherung. Die Anschlussleiste selbst muss mit den Leistungsschaltern verkabelt werden, wodurch die obenstehend aufgeführten Nachteile nicht überwunden werden.

### OFFENBARUNG DER ERFINDUNG

Aufgabe der Erfindung ist die Vereinfachung des Aufbaus einer Sicherungseinheit für einen Gebäudeanschluss, insbesondere für einen Gebäudeanschluss in elektrischen Verteilern. Weiterhin soll die Sicherungseinheit derart weitergebildet werden, dass eine geringere Wärmebelastung durch weniger Klemmstellen und Verdrahtungen entsteht und eine Fehlersuche erleichtert wird. Eine noch weitere Aufgabe der Erfindung betrifft die Vereinfachung des Aufbaus einer Sicherungseinheit für einen Gebäudeanschluss und eine Einsparung von Montagezeit und Materialkosten bei der Verdrahtung. Die Aufgabe soll dabei insbesondere für Sicherungseinheiten für den Anschluss in elektrischen Verteilern dienen.

Diese Aufgabe wird durch eine Sicherungsanordnung gemäß dem Anspruch 1 und durch eine Anschlussschiene gemäß dem Anspruch 6 gelöst. Vorteilhafte Weiterbildungen der Erfindung sind in den abhängigen Ansprüchen angegeben.

Die Erfindung schließt die technische Lehre ein, dass die Sicherungsanordnung eine elektrische Anschlussschiene aufweist, wobei die Anschlussschiene eine N-Sammelschiene zur Bildung des Nullleiters aufweist, an der die jeweiligen Nullleiter der Anschlussleitungen elektrisch anbindbar sind und wobei die Anschlussschiene eine PE-Sammelschiene zur Bildung des Schutzleiters aufweist, an der die jeweiligen Schutzleiter der Anschlussleitungen elektrisch anbindbar sind, und wobei die Anschlussschiene eine Anzahl von Phasenleitern aufweist, die aus der Anschlussschiene derart hervor ragen, dass diese in Klemmmitteln der Ausgangsseite der Sicherungen eingeführt und mit diesen an den Sicherungen festgeklemmt sind, sodass die Anschlussschiene an den Sicherungen angeordnet ist und über die eine direkte Kontaktierung der Außenleiter mit einer Ausgangsseite der Sicherungen sowie eine Kontaktierung von Nullleitern und Schutzleitern der Vielzahl von Anschlussleitungen ausgebildet ist.

Die erfindungsgemäße Anschlussschiene ermöglicht die Ausbildung einer Sicherungseinheit ohne eine den Sicherungen nach- bzw. vorgelagerte Anschlussleiste. Die Außenleiter der Vielzahl von Anschlussleitungen können genauso wie die Nullleiter und die Schutzleiter mit der Anschlussschiene verbunden werden, sodass die Anschlussleitungen, die in die Sicherungseinheit hineingeführt werden, über die Anschlussschiene direkt mit der Ausgangsseite der Sicherungen der Sicherungsleiste verbunden werden können. Folglich entfällt mit dem Wegfall einer Anschlussleiste auch eine aufwendige Verdrahtung der Sicherungen der Sicherungsleiste mit den Anschlussklemmen der Anschlussleiste. Die erfindungsgemäße Anschlussschiene weist folglich entsprechende Mittel auf, über die die Außenleiter, die Nullleiter und die Schutzleiter der Vielzahl der Anschlussleitungen einzeln angeklemmt werden können. Diese Klemmmittel können beispielsweise ähnlich oder gleich ausgeführt werden wie die Klemmmittel der Anschlussleiste, indem beispielsweise federbelastete Klemmelemente dazu ausgebildet sind, die Außenleiter, Nullleiter und Schutzleiter klemmend aufzunehmen. Mit besonderem Vorteil weist dabei die Anschlussschiene Mittel auf, mit denen die Anschlussschiene haltend an den Sicherungen der Sicherungsleiste angeordnet werden kann, sodass die Anschlussschiene gemeinsam mit der Sicherungsleiste die Sicherungsanordnung bildet.

Erfindungsgemäß weist die Anschlussschiene eine N-Sammelschiene zur Bildung des Nullleiters auf, wobei an der N-Sammelschiene die Nullleiter der jeweiligen Anschlussleitungen elektrisch angebunden werden können.

Weiterhin weist die Anschlussschiene erfindungsgemäß eine PE-Sammelschiene zur Bildung des Schutzleiters auf, wobei an der PE-Sammelschiene die jeweiligen Schutzleiter der Anschlussleitungen elektrisch angebunden sind.

Zur vollständigen Anbindung der Anschlussleitungen direkt an die Anschlussschiene weist diese überdies eine Anzahl von Phasenleitern auf, die mit der jeweiligen Ausgangsseite der Sicherungen zur Kontaktierung der Außenleiter verbunden ist. Zugleich können die Außenleiter der Anschlussleitungen mit den Phasenleitern verbunden werden. Die Verbindung kann dabei die gleiche Klemmverbindung aufweisen wie die Verbindung an die N-Sammelschiene und an die PE-Sammelschiene, insbesondere in nebeneinander angeordneter Weise.

Die Ausgangsseite der Sicherungen weist in an sich bekannter Weise ein Klemmmittel auf. Erfindungsgemäß ist dabei vorgesehen, dass die Phasenleiter der Anschlussschiene in den Klemmmitteln der Sicherungen aufgenommen werden können und wodurch die Anschlussschiene an der Ausgangsseite der Sicherungen gehalten werden kann. Die gesamte Anschlussschiene kann dabei bereits dadurch an den Sicherungen befestigt werden, indem die Vielzahl der Phasenleiter an die Sicherungen angeklemmt werden, und die Klemmmittel umfassen beispielsweise Schraubenklemmen. Die Anschlussschiene ist insbesondere so ausgebildet, dass auf einer ersten Seite die Phasenleiter aus der Anschlussschiene herausragen, um in die Ausgangsseite der Sicherungen eingeführt zu werden, und auf der gegenüberliegenden Seite befinden sich die Anschlussklemmen, an die die Außenleiter, die Nullleiter und die Schutzleiter der Vielzahl der Anschlussleitungen angeklemmt werden können. Die Anzahl der Anschlussklemmen im Vergleich zur Anzahl der Phasenleiter in Längsrichtung der Anschlussschiene beträgt folglich 3:1.

Die Anschlussschiene ist mit weiterem Vorteil so ausgebildet, dass die Klemmmittel in einer Längsrichtung der Anschlussschiene quer vor der Ausgangsseite der Sicherungen derart nebeneinander belegt und damit belegbar sind, dass in wiederkehrender Weise der Außenleiter, der Nullleiter und der Schutzleiter aufeinander folgen. Auch ist es vorteilhaft, wenn die Anschlussschiene ein Eingangsanschlussmittel zur Eingangskontaktierung eines versorgerseitigen Nullleiters aufweist, das mit der N-Sammelschiene verbunden ist. Ebenso ist es von Vorteil, wenn die Anschlussschiene ein Eingangsanschlussmittel zur Eingangskontaktierung eines versorgerseitigen Schutzleiters aufweist, das mit der PE-Sammelschiene verbunden ist. Insbesondere dann, wenn ein Versorgungskabel eines Energieversorgers in die Sicherungseinheit eingeführt wird, können der Nullleiter und der Schutzleiter an den Sicherungen vorbei direkt an die Anschlussschiene angebracht werden.

Die Erfindung richtet sich weiterhin auf eine Anschlussschiene zur Anordnung an mehrere Sicherungen einer Sicherungsanordnung zur Absicherung von Außenleitern einer elektrischen Sicherungseinheit für einen Gebäudeanschluss, wobei die Anschlussschiene eine N-Sammelschiene zur Bildung des Nullleiters aufweist, an der die jeweiligen Nullleiter der Anschlussleitungen elektrisch anbindbar sind und eine PE-Sammelschiene zur Bildung des Schutzleiters aufweist, an der die jeweiligen Schutzleiter der Anschlussleitungen elektrisch anbindbar sind, und Phasenleiter zur Anordnung an einer Ausgangsseite der Sicherungen aufweist, die aus der Anschlussschiene derart hervor ragen, dass diese in Klemmmitteln der Ausgangsseite der Sicherungen eingeführt und mit diesen an den Sicherungen festklemmbar sind und eine Vielzahl von Klemmmitteln zur Anordnung von Anschlussleitungen aufweist, über die eine direkte Kontaktierung der Außenleiter mit den Phasenleitern sowie eine Kontaktierung von Nullleitern und von Schutzleitern der Anschlussleitungen ermöglicht ist. Die Anschlussschiene ist vorteilhafterweise zur Anordnung an der Vielzahl der Sicherungen ausgebildet.

Insbesondere sind die Phasenleiter zur klemmenden Anordnung an Klemmmitteln der Sicherungen ausgebildet, derart, dass die Anschlussschiene haltend an den Sicherungen anordbar ist und/oder dass die Anschlussschiene ein Eingangsanschlussmittel zur Eingangskontaktierung eines versorgerseitigen Nullleiters und ein Eingangsanschlussmittel zur Eingangskontaktierung eines versorgerseitigen Schutzleiters aufweist.

Damit wird schließlich eine elektrische Sicherungseinheit für einen Gebäudeanschluss gebildet, aufweisend wenigstens eine Sicherungsleiste mit mehreren Sicherungen zur Absicherung von Außenleitern eines in die Sicherungseinheit hineinführbaren Versorgungskabels und wobei eine Vielzahl von Anschlussleitungen aus der Sicherungseinheit herausführbar ist. Erfindungsgemäß ist an den Sicherungen eine elektrische Anschlussleiste angeordnet, über die eine direkte Kontaktierung der Außenleiter mit einer Ausgangsseite der Sicherungen sowie eine Direktkontaktierung von Nullleitern und von Schutzleitern der Vielzahl von Anschlussleitungen ausgebildet ist. Weitere Merkmale und sich mit diesen ergebende Vorteile, die in Zusammenhang mit der vorstehend beschriebenen Sicherungsanordnung aufgeführt sind, finden für die elektrische Sicherungseinheit für eine Kombination ebenfalls Berücksichtigung.

Insbesondere weist das elektrische Versorgungskabel einen Nullleiter und einen Schutzleiter auf, wobei der Nullleiter und der Schutzleiter mit einer Anschlussschiene verbindbar sind. Weiterhin ist es von Vorteil, wenn sich die Anschlussleitungen beginnend von der Anordnung an der elektrischen Anschlussschiene unterbrechungsfrei aus der Sicherungseinheit heraus erstrecken.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematisierte Ansicht einer elektrischen Sicherungseinheit für einen Gebäudeanschluss mit einer erfindungsgemäßen Sicherungsanordnung und
- Fig. 2: eine Detailansicht der Sicherungsanordnung mit an dieser angeordneten Anschlussleitungen und mit einem Teil der Sicherungsleiste.

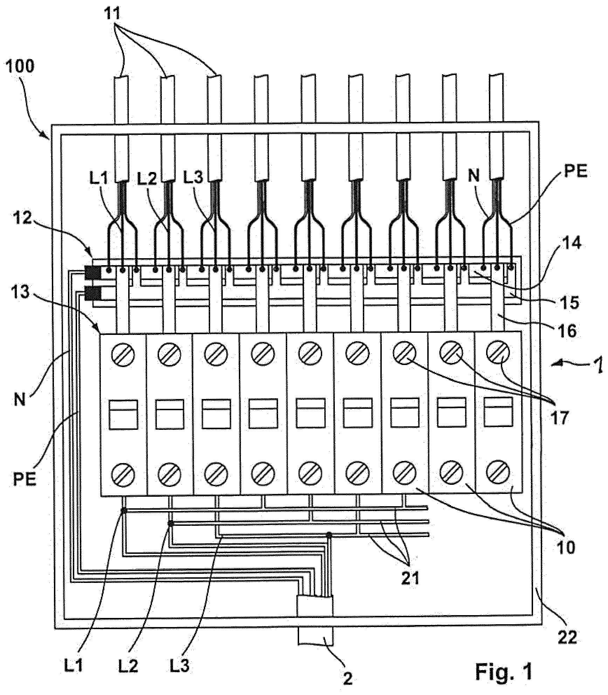

Figur 1 stellt in schematisierter Weise eine Sicherungseinheit 100 dar, die als Grundstruktur ein Gehäuse 22 aufweist und zur Bildung eines elektrischen Gebäudeanschlusses dient. Die elektrische Sicherungseinheit 100 wird im Allgemeinen auch als Sicherungskasten bezeichnet und dient dazu, eine abgesicherte Verbindung zwischen einem Versorgungskabel 2 eines Energieversorgers und einer Vielzahl von Anschlussleitungen 11 zu schaffen. Das Versorgungskabel 2 wird im Allgemeinen als Hausanschlussleitung ausgeführt und dient als elektrische Verbindung zwischen einem Zählerschrank und dem Verteiler, und das Versorgungskabel 2 tritt gemäß der Darstellung von einer Unterseite in das Gehäuse 22 ein. Auf der Oberseite des Gehäuses 22 sind die Anschlussleitungen 11 aus dem Gehäuse 22 wieder herausgeführt und verteilen sich im Haus oder Gebäude.

Als zentrale Einrichtung weist die Sicherungseinheit 100 eine Sicherungsanordnung 1 mit einer Sicherungsleiste umfassend eine Vielzahl von Sicherungen 10 auf. Die Sicherungen 10 sind im Allgemeinen auf einer Schiene aufgenommen und parallel nebeneinander angeordnet, sodass die Vielzahl der Sicherungen 10 die Sicherungsleiste der Sicherungsanordnung 1 bildet.

Die Außenleiter L1, L2 und L3 des Versorgungskabels 2 sind mittels Sammelschienen 21 an die Sicherungen 10 angeschlossen, sodass die Sicherungen 10 in ihrer nebeneinander angeordneten Reihenfolge mit den Außenleitern L1, L2, L3 in wiederkehrender Weise belegt sind.

Das Versorgungskabel 2 umfasst weiterhin einen Nullleiter N und einen Schutzleiter PE, die an den Sicherungen 10 vorbeigeführt werden.

Die Anschlussleitungen 11 sind 3-adrig ausgeführt und weisen ebenfalls einen Außenleiter L1, L2 oder L3 sowie einen Nullleiter N und einen Schutzleiter PE auf.

Erfindungsgemäß weist die Sicherungsanordnung 1 eine elektrische Anschlussschiene 12 auf, die an den Sicherungen 10 angeordnet ist und über die eine direkte Kontaktierung der Außenleiter L1, L2 und L3 mit einer Ausgangsseite 13 der Sicherungen 10 sowie eine Kontaktierung von Nullleitern N und von Schutzleitern PE der Vielzahl von Anschlussleitungen 11 ausgebildet ist. Die Anschlussleitungen 11 sind nach dem Eintritt in das Gehäuse 22 direkt vor bzw. an die Sicherungsanordnung 1 geführt und mit der Anschlussschiene 12 verbunden. Die Anschlussschiene 12 bildet dabei einen Teil der Sicherungsanordnung 1.

Die Ausgangsseiten 13 der Sicherungen 10 weisen Klemmmittel 17 auf, und die Anschlussschiene 12 weist Phasenleiter 16 auf. Die Phasenleiter 16 sind dabei mit den Klemmmitteln 17 der jeweiligen Sicherung 10 verbunden. Ferner sind auf der gegenüberliegenden Seite die Außenleiter L1, L2 und L3 der Anschlussleitungen 11 mit den Phasenleitern 16 verbunden.

Die Anschlussschiene 12 weist weiterhin eine N-Sammelschiene 14 und eine PE-Sammelschiene 15 auf, und die Nullleiter N der Anschlussleitungen 11 sind mit der N-Sammelschiene 14 verbunden, und die Schutzleiter PE der Anschlussleitungen 11 sind mit der PE-Sammelschiene 15 verbunden.

Weiterhin ist eine Verbindung zwischen der N-Sammelschiene 14 und dem Nullleiter N des Versorgungskabels 2 und eine Verbindung der PE-Sammelschiene 15 mit dem Schutzleiter PE des Versorgungskabels 2 vorgesehen.

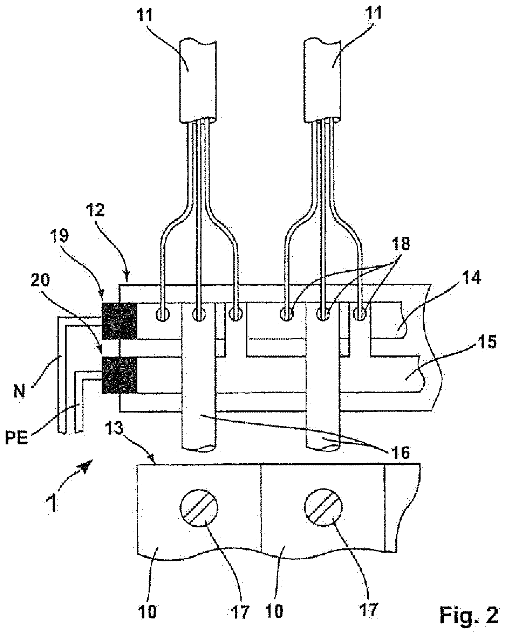

Figur 2 zeigt in einer Detailansicht einen Teil der Anschlussschiene 12 in Anordnung vor der Sicherungsleiste der Sicherungsanordnung 1 mit beispielhaft dargestellten Sicherungen 10, umfassend die Klemmmittel 17. Die Phasenleiter 16 ragen aus der Anschlussschiene 12 derart hervor, dass diese in die Klemmmittel 17 einführbar und mit diesen an den Sicherungen 10 festklemmbar sind. Folglich kann die Anschlussschiene 12 bereits über die Phasenleiter 16 haltend an der Sicherungsanordnung 1 angebracht werden.

Die Phasenleiter 16, die N-Sammelschiene 14 und die PE-Sammelschiene 15 sind elektrisch gegeneinander isoliert in der Anschlussschiene 12 aufgenommen. Die Anschlussschiene 12 weist zur Anbindung der Anschlussleitungen 11 Klemmmittel 18 auf, die beispielsweise gebildet sind durch aktivierbare Federelemente zur dauerhaften Klemmung und elektrischen Kontaktierung der Anschlussleitungen 11.

Zur Anbindung des Nullleiters N und des Schutzleiters PE weisen die N-Sammelschiene 14 ein Eingangsanschlussmittel 19 und die PE-Sammelschiene 15 ein Eingangsanschlussmittel 20 auf. Der Nullleiter N und der Schutzleiter PE sind dabei unmittelbar aus dem Versorgungskabel 2 an die Anschlussschiene 12 herangeführt.

Die Anschlussschiene 12 wird direkt vor die Ausgangsseite 13 der Sicherungen 10 angeordnet. In nicht näher gezeigter Weise kann die Anschlussschiene 12 ein isolierendes Gehäuse aufweisen, und die Anschlussschiene 12 ist länglich ausgeführt und erstreckt sich quer vor der Sicherungsleiste parallel zur Erstreckungsrichtung derselben.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch insofern diese in den Schutzbereich der Patentansprüche fallen.

### Bezugszeichenliste:

- 1: Sicherungsanordnung
- 2: Versorgungskabel

- 10: Sicherung
- 11: Anschlussleitung
- 12: Anschlussschiene
- 13: Ausgangsseite
- 14: N-Sammelschiene
- 15: PE-Sammelschiene
- 16: Phasenleiter
- 17: Klemmmittel
- 18: Klemmmittel
- 19: Eingangsanschlussmittel
- 20: Eingangsanschlussmittel
- 21: Sammelschiene
- 22: Gehäuse

- 100: Sicherungseinheit

- L1: Außenleiter
- L2: Außenleiter
- L3: Außenleiter

- N: Nullleiter
- PE: Schutzleiter

## Patentansprüche

1. Sicherungsanordnung (1) aufweisend mehrere Sicherungen (10) zur Absicherung von Außenleitern (L1, L2, L3) einer elektrischen Sicherungseinheit (100) für einen Gebäudeanschluss, wobei die Sicherungen (10) mit jeweiligen Außenleitern (L1, L2, L3) einer Vielzahl von Anschlussleitungen (11) elektrisch verbindbar sind, **dadurch gekennzeichnet,**
**dass** die Sicherungsanordnung (1) weiterhin eine elektrische Anschlussschiene (12) aufweist, wobei die Anschlussschiene (12) eine N-Sammelschiene (14) zur Bildung des Nullleiters (N) aufweist, an der die jeweiligen Nullleiter (N) der Anschlussleitungen (11) elektrisch anbindbar sind und wobei die Anschlussschiene (12) eine PE-Sammelschiene (15) zur Bildung des Schutzleiters (PE) aufweist, an der die jeweiligen Schutzleiter (PE) der Anschlussleitungen (11) elektrisch anbindbar sind, und wobei die Anschlussschiene (12) eine Anzahl von Phasenleitern (16) aufweist, die aus der Anschlussschiene (12) derart hervor ragen, dass diese in Klemmmitteln (17) der Ausgangsseite (13) der Sicherungen (10) eingeführt und mit diesen an den Sicherungen (10) festgeklemmt sind, sodass die Anschlussschiene (12) an den Sicherungen (10) angeordnet ist und über die eine direkte Kontaktierung der Außenleiter (L1, L2, L3) mit einer Ausgangsseite (13) der Sicherungen (10) sowie eine Kontaktierung von Nullleitern (N) und von Schutzleitern (PE) der Vielzahl von Anschlussleitungen (11) ausgebildet ist.

2. Sicherungsanordnung (1) nach Anspruch 1,
**dadurch gekennzeichnet,**
**dass** die Anschlussschiene (12) Klemmmittel (18) aufweist, mit denen die Außenleiter (L1, L2, L3), die Nullleiter (N) und die Schutzleiter (PE) der Anschlussleitungen (11) an die Anschlussschiene (12) angeklemmt sind.

3. Sicherungsanordnung (1) nach Anspruch 2,
**dadurch gekennzeichnet,**
**dass** die Klemmmittel (18) in einer Längsrichtung der Anschlussschiene (12) quer vor der Ausgangsseite (13) der Sicherungen (10) derart nebeneinander belegt sind, das in wiederkehrender Weise der Außenleiter (L1, L2, L3), der Nullleiter (N) und der Schutzleiter (PE) aufeinander folgen.

4. Sicherungsanordnung (1) nach einem der vorgenannten Ansprüche,
**dadurch gekennzeichnet,**
**dass** die Anschlussschiene (12) ein Eingangsanschlussmittel (19) zur Eingangskontaktierung eines versorgerseitigen Nullleiters (N) aufweist, das mit der N-Sammelschiene (14) verbindbar ist.

5. Sicherungsanordnung (1) nach einem der vorgenannten Ansprüche,
**dadurch gekennzeichnet,**
**dass** die Anschlussschiene (12) ein Eingangsanschlussmittel (20) zur Eingangskontaktierung eines versorgerseitigen Schutzleiters (PE) aufweist, das mit der PE-Sammelschiene (15) verbindbar ist.

6. Anschlussschiene (12) zur Anordnung an mehreren Sicherungen (10) einer Sicherungsanordnung (1), die zur Absicherung von Außenleitern (L1, L2, L3) einer elektrischen Sicherungseinheit (100) für einen Gebäudeanschluss ausgebildet sind, wobei die Anschlussschiene (12)
- eine N-Sammelschiene (14) zur Bildung des Nullleiters (N) aufweist, an der die jeweiligen Nullleiter (N) der Anschlussleitungen (11) elektrisch anbindbar sind und
- eine PE-Sammelschiene (15) zur Bildung des Schutzleiters (PE) aufweist, an der die jeweiligen Schutzleiter (PE) der Anschlussleitungen (11) elektrisch anbindbar sind,
- Phasenleiter (16) zur Anordnung an einer Ausgangsseite (13) der Sicherungen (10) aufweist, die aus der Anschlussschiene (12) derart hervor ragen, dass diese in Klemmmitteln (17) der Ausgangsseite (13) der Sicherungen (10) einführbar und mit diesen an den Sicherungen (10) festklemmbar sind und
- eine Vielzahl von Klemmmitteln (18) zur Anordnung von Anschlussleitungen (11) aufweist,
über die eine direkte Kontaktierung der Außenleiter (L1, L2, L3) mit den Phasenleitern (16) sowie eine Kontaktierung von Nullleitern (N) und von Schutzleitern (PE) der Anschlussleitungen (11) ermöglicht ist.

7. Anschlussschiene (12) nach Anspruch 6,
**dadurch gekennzeichnet,**
**dass** die Phasenleiter (16) zur klemmenden Anordnung an Klemmmitteln (17) der Sicherungen (10) ausgebildet sind, derart, dass die Anschlussschiene (12) haltend an den Sicherungen (10) anordbar ist und/oder dass die Anschlussschiene (12) ein Eingangsanschlussmittel (19) zur Eingangskontaktierung eines versorgerseitigen Nullleiters (N) und ein Eingangsanschlussmittel (20) zur Eingangskontaktierung eines versorgerseitigen Schutzleiters (PE) aufweist.

## Claims

1. A fuse arrangement (1) comprising a plurality of fuses (10) for protecting outer conductors (L1, L2, L3) of an electrical fuse unit (100) for a building connection, wherein the fuses (10) are electrically connectable to respective outer conductors (L1, L2, L3) of a plurality of connector lines (11),
**characterized in that**
the fuse arrangement (1) further has an electrical connecting bar (12), with the connecting bar (12) having an N busbar (14) for forming the neutral conductor (N) to which the respective neutral conductors (N) of the connector lines (11) are electrically connectable, and with the connecting bar (12) having a PE busbar (15) for forming the protective conductor (PE) to which the respective protective conductors (PE) of the connector lines (11) are electrically connectable, and with the connecting bar (12) having a plurality of phase conductors (16) that project out of the connecting bar (12) such that they are introduced into clamping means (17) of the output side (13) of the fuses (10) and are fixedly clamped by them at the fuses (10 so that the connecting bar (12) is arranged at the fuses (10) and via which a direct contact of the outer conductors (L1, L2, L3) to an output side (13) of the fuses (10) and a contact of neutral conductors (N) and of protective conductors (PE) of the plurality of connector lines (11) is formed

2. A fuse arrangement (1) in accordance with claim 1,
**characterized in that**
the connection bar (12) has clamping means (18) by which the outer conductors (L1, L2, L3), the neutral conductors (N), and the protective conductors (PE) of the connector lines (11) are clamped to the connecting bar (12).

3. A fuse arrangement (1) in accordance with claim 2,
**characterized in that**
the clamping means (18) are occupied next to one another in a longitudinal direction of the connecting bar (12) transversely in front of the output side (13) of the fuses (10) such that the outer conductor (L1, L2, L3), the neutral conductor (N) and the protective conductor (PE) follow one another in a recurring manner.

4. A fuse arrangement (1) in accordance with one of the preceding claims,
**characterized in that**
the connecting bar (12) has an input connector means (19) for the input contact of a neutral conductor (N) at the supply side that is connectable to the N busbar (14).

5. A fuse arrangement (1) in accordance with one of the preceding claims,
**characterized in that**
the connecting bar (12) has an input connector means (20) for the input contact of a protective conductor (PE) at the supply side that is connectable to the PE busbar (15).

6. A connecting bar (12) for arrangement at a plurality of fuses (10) of a fuse arrangement (1) that are formed for the protection of outer
conductors (L1, L2, L3) of an electrical fuse unit (100) for a building connection, wherein the connecting bar (12)
- has an N busbar (14) for forming the neutral conductor (N) to which the respective neutral conductors (N) of the connector lines (11) are electrically connectable; and
- has a PE busbar (15) for forming the protective conductor (PE) to which the respective neutral conductors (PE) of the connector lines (11) are electrically connectable;
- has phase conductors (16) for arrangement at an output side (13) of the fuses (10) that project out of the connecting bar (12) such that they can be introduced into clamping means (17) of the output side (13) of the fuses (10) and are fixedly clampable to the fuses (10) thereby; and
- has a plurality of clamping means (18) for the arrangement of connector lines (11),
via which a direct contact of the outer conductors (L1, L2, L3) to the phase conductors (16) and a contact of neutral conductors (N) and of protective conductors (PE) of the connector lines (11) is made possible.

7. A connecting bar (12) in accordance with claim 6,
**characterized in that**
the phase conductors (16) are configured for the clamping arrangement at clamping means (17) of the fuses (10) such that the connecting bar (12) is arrangeable at the fuses (10) in a holding manner and/or such that the connecting bar (12) has an input connector means (19) for the input contact of a neutral conductor (N) at the supply side and an input connector means (20) for the input contact of a protective conductor (PE) at the supply side.

## Revendications

1. Agencement de fusibles (1) comportant plusieurs fusibles (10), destiné à la protection de conducteurs extérieurs (L1, L2, L3) d'un ensemble fusible (100) électrique pour un branchement de bâtiment, les fusibles (10) pouvant être raccordés électriquement à des conducteurs extérieurs (L1, L2, L3) respectifs d'une pluralité de lignes de raccordement (11),
**caractérisé en ce que**
l'agencement de fusibles (1) comporte en outre une barre de raccordement (12) électrique, la barre de raccordement (12) comportant une barre omnibus de neutre (14) pour former le conducteur neutre (N), à laquelle les conducteurs neutres (N) respectifs des lignes de raccordement (11) peuvent être raccordés électriquement et la barre de raccordement (12) comportant une barre omnibus de conducteur de protection (15) pour former le conducteur de protection (PE), à laquelle les conducteurs de protection (PE) respectifs des lignes de raccordement (11) peuvent être raccordés électriquement, et la barre de raccordement (12) comportant un certain nombre de conducteurs de phase (16), qui dépassent de la barre de raccordement (12) de telle manière qu'ils sont introduits dans des moyens de serrage (17) du côté sortie (13) des fusibles (10) et fixés avec ceux-ci sur les fusibles (10), de telle sorte que la barre de raccordement (12) est agencée sur les fusibles (10) et par le biais desquels l'établissement d'un contact direct des conducteurs extérieurs (L1, L2, L3) avec un côté sortie (13) des fusibles (10) ainsi que l'établissement d'un contact de conducteurs neutres (N) et de conducteurs de protection (PE) de la pluralité de lignes de raccordement (11) est réalisé.

2. Agencement de fusibles (1) selon la revendication 1,
**caractérisé en ce que**
la barre de raccordement (12) comporte des moyens de serrage (18), au moyen desquels les conducteurs extérieurs (L1, L2, L3), les conducteurs neutres (N) et les conducteurs de protection (PE) des lignes de raccordement (11) sont branchés à la barre de raccordement (12)

3. Agencement de fusibles (1) selon la revendication 2,
**caractérisé en ce que**
les moyens de serrage (18) sont occupés, dans une direction longitudinale de la barre de raccordement (12), les uns à côté des autres transversalement devant le côté sortie (13) des fusibles (10), de telle manière que le conducteur extérieur (L1, L2, L3), le conducteur neutre (N) et le conducteur de protection (PE) se succèdent de manière répétée.

4. Agencement de fusibles (1) selon l'une des revendications précédentes,
**caractérisé en ce que**
la barre de raccordement (12) comporte un moyen de raccordement d'entrée (19) pour l'établissement du contact d'entrée d'un conducteur neutre (N) côté alimentation, qui peut être raccordé à la barre omnibus de neutre (14).

5. Agencement de fusibles (1) selon l'une des revendications précédentes,
**caractérisé en ce que**
la barre de raccordement (12) comporte un moyen de raccordement d'entrée (20) pour l'établissement du contact d'entrée d'un conducteur de protection (PE) côté alimentation, qui peut être raccordé à la barre omnibus de conducteur de protection (15).

6. Barre de raccordement (12) destinée à être agencée sur plusieurs fusibles (10) d'un agencement de fusibles (1), qui sont conçus pour la protection de conducteurs extérieurs (L1, L2, L3) d'un ensemble fusible (100) électrique pour un branchement de bâtiment, la barre de raccordement (12) comportant
- une barre omnibus de neutre (14) pour former le conducteur neutre (N), à laquelle les conducteurs neutres (N) respectifs des lignes de raccordement (11) peuvent être raccordés électriquement et
- une barre omnibus de conducteur de protection (15) pour former le conducteur de protection (PE), à laquelle les conducteurs de protection (PE) respectifs des lignes de raccordement (11) peuvent être raccordés électriquement,
- des conducteurs de phase (16) destinés à être agencés d'un côté sortie (13) des fusibles (10), qui dépassent de la barre de raccordement (12) de telle manière qu'ils peuvent être introduits dans des moyens de serrage (17) du côté sortie (13) des fusibles (10) et peuvent être serrés avec ceux-ci sur les fusibles (10) et
- une pluralité de moyens de serrage (18) destinés à l'agencement de lignes de raccordement (11),
par le biais desquels l'établissement d'un contact direct des conducteurs extérieurs (L1, L2, L3) avec les conducteurs de phase (16) ainsi que l'établissement d'un contact de conducteurs neutres (N) et de conducteurs de protection (PE) des lignes de raccordement (11) est rendu possible.

7. Barre de raccordement (12) selon la revendication 6,
**caractérisé en ce que**
les conducteurs de phases (15) sont conçus pour l'agencement par serrage sur des moyens de serrage (17) des fusibles (10), de telle manière que la barre de raccordement (12) peut être agencée de manière retenue sur les fusibles (10) et/ou **en ce que** la barre de raccordement (12) comporte un moyen de raccordement d'entrée (19) pour l'établissement d'un contact d'entrée d'un conducteur neutre (N) côté alimentation et un moyen de raccordement d'entrée (20) pour l'établissement d'un contact d'entrée d'un conducteur de protection (PE) côté alimentation.
